**Europäisches Patentamt**

**European Patent Office**

**Office européen des brevets**

(11) Veröffentlichungsnummer: **0 448 836 A1**

## (12) EUROPÄISCHE PATENTANMELDUNG

(21) Anmeldenummer: **90125344.3**

(22) Anmeldetag: **22.12.90**

(51) Int. Cl.5: **F04B 9/04**

(30) Priorität: **29.03.90 DE 4010090**

(43) Veröffentlichungstag der Anmeldung:
**02.10.91 Patentblatt 91/40**

(84) Benannte Vertragsstaaten:
**DE FR GB**

(71) Anmelder: **ROBERT BOSCH GmbH**
**Postfach 10 60 50**
**W-7000 Stuttgart 10(DE)**

(72) Erfinder: **Zirps, Wilhelm, Ing. (grad.)**
**Immanuel-Kant-Strasse 9**
**W-7254 Hemmingen(DE)**

(54) **Hubkolbenpumpe.**

(57) Das Geräuschverhalten der Hubkolbenpumpe soll verbessert werden.

Die Hubkolbenpumpe weist eine Antriebswelle (13) auf, welche einen zu deren Längsachse (O) unter einem spitzen Winkel ($\beta$) abgeknickten kreiszylindrischen Taumelzapfen (14) mit einem umfangsseitig angeordneten Wälzlagerring (18) hat. Ein Pumpenkolben (21) greift mit seiner als Teil einer Kugeloberfläche ausgebildeten Stirnfläche (27) an der Umfangsfläche (29) des Wälzlagerrings (18) an. Die Längsachsen (O, P) der Antriebswelle (13) sowie des Pumpenkolbens (21) verlaufen an einer gemeinsamen Ebene und schneiden sich rechtwinklig. Außerdem sind die Längsachsen (O, T) der Antriebwelle (13) und des Taumelzapfens (14) gegeneinander versetzt. Aufgrund dieser Konfiguration wird eine gegenüber der Saugphase erheblich längere Förderphase während eines Pumpenzyklus erzielt. Druck- und Kraftänderungen verlaufen daher in der verlängerten Förderphase langsamer, was das Geräuschverhalten der Hubkolbenpumpe (10) verbessert.

Die Hubkolbenpumpe (10) ist beispielsweise in Fahrzeug-Bremsanlagen zur Förderung von Bremsflüssigkeit einsetzbar.

EP 0 448 836 A1

Stand der Technik

Die Erfindung geht aus von einer Hubkolbenpumpe nach der Gattung des Hauptanspruchs.

Es ist schon eine solche Pumpe bekannt (GB-PS 484 142), bei welcher der Wälzlagerring eine Scheibe trägt, an deren Stirnfläche mehrere Pumpenkolben angreifen, deren Längsachse parallel zur Längsachse der Antriebswelle verläuft. Eine derartige Pumpe wird als Taumelscheibenpumpe bezeichnet und gehört zur Gattung der Hubkolbenpumpen, bei denen der Förderstrom eines Einzelzylinders etwa einem sinusförmigen Verlauf mit gleich langer Saug- und Förderphase folgt. Hubkolbenpumpen haben aufgrund dieses Förderstromverlaufs ein lautes Betriebsgeräusch. Dieses ist einerseits durch Änderungen des auf die druckbeaufschlagten Pumpenbauteile wirkenden Druckes und andererseits durch Kraftänderungen im Antriebsstrang der Pumpe bedingt, die das Pumpengehäuse zum Schwingen und Abstrahlen von Geräuschen anregen. Darüber hinaus tragen von der Betriebsflüssigkeit der Pumpe durchströmte Bauteile, wie Ventile, Leitungen, Stellmotoren, durch den pulsierenden Flüssigkeitsstrom zur Geräuschemission bei. Die Stärke des Geräusches ist von der Größe der Druck- und Kraftänderungen sowie von der Geschwindigkeit, mit der sich diese vollziehen, abhängig. Pumpen mit nur einem Zylinder sind, wie erwähnt, hinsichtlich dieser, die Lautheit entscheidend beeinflussenden Größen besonders ungünstig, da sie nur während der Hälfte eines aus Saughub und Druckhub (= Saugphase und Förderphase) bestehenden Zyklus fördern, wobei sich der Förderstrom zwischen Null und Maximum ändert. Entsprechend groß ist die Kraftänderungsgeschwindigkeit im Triebwerk (Antriebsstrang) und die Druckpulsation des Förderstromes.

Vorteile der Erfindung

Die erfindungsgemäße Hubkolbenpumpe mit den kennzeichnenden Merkmalen des Hauptanspruchs hat demgegenüber den Vorteil, daß das Geräuschverhalten erheblich verbessert ist, weil die Saugphase des Pumpzyklus verkürzt, die Förderphase jedoch verlängert wird. Demzufolge ist die Kraftänderungsgeschwindigkeit in der Förderphase, in der überwiegend Geräuschemission auftritt, geringer als beim bekannten Entwicklungsstand. Die Pumpe ist daher leiser als eine solche mit gleich langen Phasen.

Durch die in den Unteransprüchen aufgeführten Maßnahmen sind vorteilhafte Weiterbildungen und Verbesserungen der im Hauptanspruch angegebenen Hubkolbenpumpe möglich.

Mit der im Anspruch 2 gekennzeichneten Ausgestaltung der Hubkolbenpumpe wird bei derartig angeordneten Pumpenkolben eine Verringerung der Geräuschpulsation erzielt, weil die geräuschemittierende Förderphase des einen Pumpenkolbens in die Saugphase des anderen Pumpenkolbens fällt sowie eine gewisse Überlappung der Förderphasen beider Pumpenkolben auftritt, was sich vergleichmäßigend auf das Geräuschverhalten der Pumpe auswirkt.

Durch die im Anspruch 3 angegebene Maßnahme wird der Ungleichförmigkeitsgrad der Förderstrompulsation aufgrund der sich überlappenden Förderphasen der beiden Pumpenkolben verringert, der bei sinusförmig fördernden Hubkolbenpumpen bekannter Bauart mit geradzahliger Pumpenkolbenanzahl relativ groß ist im Vergleich zu Pumpen mit ungeradzahliger Pumpenkolbenanzahl.

Zeichnung

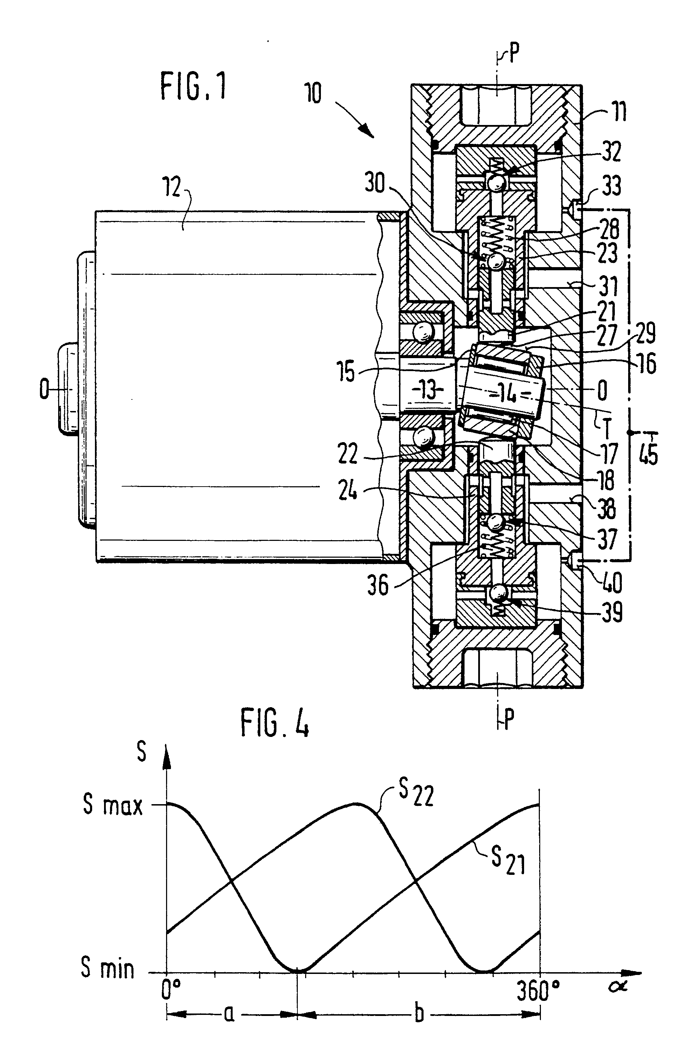

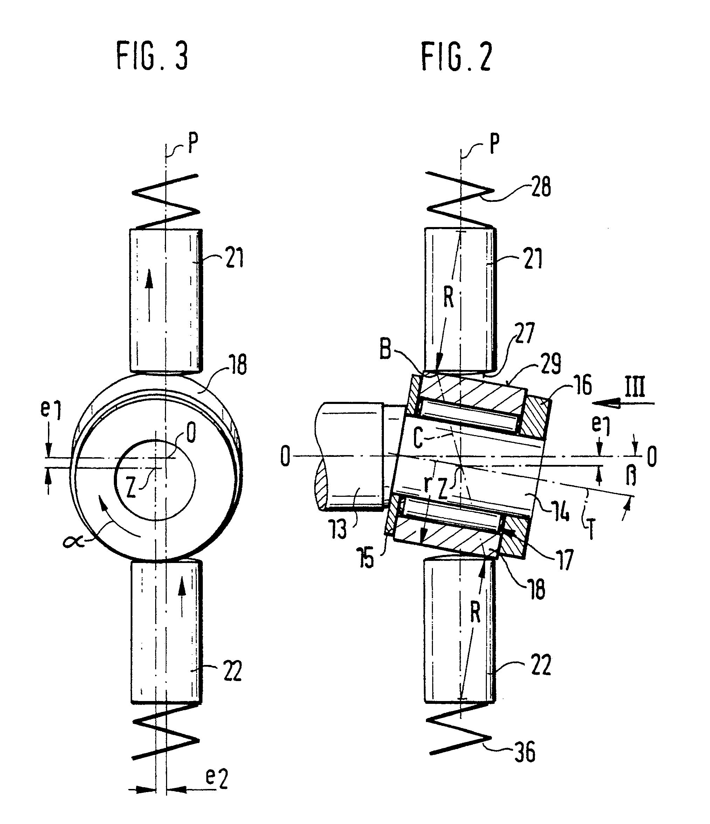

Ein Ausführungsbeispiel der Erfindung ist in der Zeichnung vereinfacht dargestellt und in der nachfolgenden Beschreibung näher erläutert. Es zeigen Figur 1 einen Längsschnitt durch eine Hubkolbenpumpe mit einem Taumelzapfen für den Antrieb von zwei Pumpenkolben, Figur 2 eine Ansicht des Taumelzapfens mit Pumpenkolben entsprechend Figur 1, jedoch in anderem Maßstab, Figur 3 eine Ansicht auf den Taumelzapfen und die Pumpenkolben in Richtung des Pfeiles III in Figur 2 gesehen und Figur 4 ein Diagramm des Verlaufs des Hubes von zwei diametral gegenüberliegend angeordneten Pumpenkolben über den Drehwinkel des Taumelzapfens.

Beschreibung des Ausführungsbeispiels

Eine in Figur 1 im Schnitt dargestellte Hubkolbenpumpe 10 besitzt ein Gehäuse 11, an das ein elektrischer Antriebsmotor 12 angeflanscht ist. Der Antriebsmotor 12 besitzt eine Antriebswelle 13 mit einer Längsachse O. Die Antriebswelle 13 erstreckt sich mit einem kreiszylindrischen Taumelzapfen 14 in das Gehäuse 11 der Hubkolbenpumpe 10. Der Taumelzapfen 14 ist mit seiner Längsachse T unter einem spitzen Winkel $\beta$ zur Längsachse O der Antriebswelle 13 abgeknickt (Figur 2). Der Taumelzapfen 14 trägt umfangsseitig ein zwischen zwei Führungsscheiben 15 und 16 angeordnetes Nadellager 17 mit einem Wälzlagerring 18 mit dem Radius r.

Im Gehäuse 11 der Hubkolbenpumpe 10 sind zwei Pumpenkolben 21 und 22 mit zugeordnetem Zylinder 23 bzw. 24 aufgenommen. Die diametral einander gegenüberliegenden Pumpenkolben 21, 22 haben eine Längsachse P, welche im rechten Winkel zur Längsachse O der Antriebswelle 13 verläuft und diese schneidet. Eine derartige Pumpenbauform wird als Radialkolbenpumpe bezeichnet.

Der Pumpenkolben 21 besitzt eine als Teil einer Kugeloberfläche ausgebildete Stirnfläche 27, mit der er aufgrund der Wirkung einer Druckfeder 28 an der Umfangsfläche 29 des Wälzlagerringes 18 anzugreifen vermag. Dem Pumpenkolben 21 ist ein Einlaßventil 30 zugeordnet, welches mit einem Pumpeneingang 31 des Gehäuses 11 in Verbindung steht. Außerdem ist ein Auslaßventil 32 vorgesehen, das mit einem Pumpenausgang 33 des Gehäuses 11 verbunden ist. In entsprechender Weise ist dem identisch ausgebildeten Pumpenkolben 22 eine Druckfeder 36, ein Einlaßventil 37 mit einem Eingang 38 sowie ein Auslaßventil 39 mit einem Ausgang 40 im Gehäuse 11 der Hubkolbenpumpe 10 zugeordnet.

In den Figuren 2 und 3 ist erkennbar, daß die Längsachse O der Antriebswelle 13 und die Längsachse P der Pumpenkolben 21 in einer gemeinsamen Ebene verlaufen. Außerdem ist der Knickwinkel $\beta$ der Längsachse T des Taumelzapfens 14 bezüglich der Längsachse O der Antriebswelle 13 ersichtlich. Es ist ferner erkennbar, daß in der gezeichneten Stellung des Taumelzapfens 14, in der dessen Längsachse T parallel zur Ebene der Längsachsen O und P verläuft, die Längsachse O der Antriebswelle 13 und die Längsachse T des Taumelzapfens gegeneinander versetzt sind, das heißt, sie schneiden sich nicht. Das Maß dieses Versatzes ist in den Figuren 2 und 3 in der gezeichneten Stellung des Taumelzapfens 14 durch die Exzentrizitäten $e_1$ und $e_2$ angegeben. Dabei beziehen sich die beiden Exzentrizitäten $e_1$ und $e_2$ auf den Abstand eines Punktes Z der Längsachse T des Taumelzapfens 14, welcher in der Projektion gemäß Figur 2 mit der Längsachse P der Pumenkolben 21 und 22 zusammenfällt. Das Maß $e_1$ gibt die Exzentrizität in vertikaler Richtung, das Maß $e_2$ die Exzentrizität in horizontaler Richtung des Punktes Z auf der Längsachse T des Taumelzapfens 14 bezüglich der Längsachse O der Antriebswelle 13 wieder. Ebenso ist der Radius R der Stirnfläche 27 des Pumpenkolbens 21 (sowie des Pumpenkolbens 22) bemerkenswert, welcher in einer solchen Größe gewählt ist, daß der Berührungspunkt B des entsprechenden Pumpenkolbens 21 bzw. 22 mit der Umfangsfläche 29 des Taumelzapfens 17 stets in der Stirnfläche 27 liegt. Außerdem ist in Figur 3 der Drehwinkel $\alpha$ der bei der gewählten Darstellung im Uhrzeigersinn drehenden Antriebswelle 13 angegeben. Ferner ist in Figur 3 durch Pfeile die momentane Bewegungsrichtung gekennzeichnet, welche die Pumpenkolben 21 und 22 bei ihrem Hub s bei rotierender Antriebswelle 13 ausführen.

Aufgrund der durch entsprechende Wahl der Parameter Knickwinkel $\beta$, Radius r, Exzentrizität $e_1$ und $e_2$ sowie Radius R geschaffenen Konfiguration von Taumelzapfen 14 mit dem Wälzlagering 18 sowie z. B. Pumpenkolben 21 ergibt sich während eines vollständigen Umlaufs der Antriebswelle 13 im Uhrzeigersinn (bezogen auf Figur 3) ein Hubverlauf $s_{21}$ des Pumpenkolbens 21, wie er in Figur 4 dargestellt ist. Während dieser Drehbewegung der Antriebswelle 13 wandert nämlich der Berührungspunkt B des Pumpenkolbens 21 auf der Umfangsfläche 29 des Wälzlageringes 18 entlang einer Bahn C, wie sie in Figur 2 zeichnerisch vereinfacht wiedergegeben ist. Dabei nimmt der Kolbenhub s des Pumpenkolbens 21 bei einem bestimmten Drehwinkel $\alpha$, welcher in der Abszisse des Diagramms gemäß Figur 4 mit Null Grad bezeichnet ist, eine Stellung maximalen Hubs $s_{max}$ ein. An diesem Punkt beginnt im Diagramm der Hubverlauf $s_{21}$ des Pumpenkolbens 21 sowie die Saugphase des Pumpenzyklus. Bei der weiteren Drehung der Antriebswelle 13 im Uhrzeigersinn verringert sich der Kolbenhub, bis er nach einem Drehwinkel von etwa 135° ein Minimum $s_{min}$ erreicht, in dem der Hubverlauf $s_{21}$ die Abszisse des Diagramms tangiert.

Hiermit ist die Saugphase a eines Pumpenzyklus abgeschlossen, in welcher sich der Pumpenkolben 21 gegen die Längsachse O der Antriebswelle bewegt hat.

Bei weiterer Drehung der Antriebswelle 13 kehrt der Pumpenkolben 21 seine Bewegungsrichtung um und entfernt sich von der Längsachse O der Antriebswelle 13. Diese Bewegung ist nach einem Drehwinkel von 360° abgeschlossen, wenn der Pumpenkolben 21 seinen maximalen Hub $s_{max}$ erreicht. Zugleich ist hiermit die Förderphase b eines Pumpenzyklus beendet. Dabei ist erfindungswesentlich, daß, wie das Diagramm nach Figur 4 deutlich zeigt, während eines Pumpenzyklus die Förderphase b deutlich länger ist als die Saugphase a. Entsprechend diesem Hubverlauf $s_{21}$ des Pumpenkolbens 21 in der Förderphase b folgt annähernd auch der Verlauf des vom Pumpenkolben 21 ausgestoßenen Volumenstroms der von der Hubkolbenpumpe 10 geförderten Betriebsflüssigkeit. In entsprechender Weise arbeitet auch der Pumpenkolben 22.

Wenn, wie in den Figuren 1 bis 3 dargestellt, die beiden Pumpenkolben 21 und 22 diametral gegenüberliegend in der rechtwinklig zur Längsachse O der Antriebswelle 13 verlaufenden Längsachse P angeordnet sind, folgt der Hub s des Pumpenkolbens 22 einem Verlauf, wie er im Diagramm gemäß Figur 4 durch die Linie $s_{22}$ wiedergegeben ist. Dieser Verlauf ist genau um einen Drehwinkel $\alpha$ von 180° zum Hubverlauf $s_{21}$ des Pumpenkolbens 21 versetzt. Die Saugphase des Pumpenkolbens 22 liegt somit völlig innerhalb der Förderphase b des Pumpenkolbens 21 und umgekehrt. Ein entsprechender Hubverlauf mit 180° Versatz wird bei jeweils zwei diametral gegenüber-

liegenden Pumpenkolben erzielt, wenn die Hubkolbenpumpe 10 ein geradzahliges Vielfaches von mehr als zwei Pumpenkolben aufweist, die in einer rechtwinklig zur Längsachse O der Antriebswelle 13 verlaufenden Ebene angeordnet sind, welche durch den Punkt Z geht. Dabei ist es vorteilhaft, alle Pumpenkolben in gleichmäßiger Teilung in dieser Ebene anzuordnen.

Die Hubkolbenpumpe 10 ist zur Verwendung in einer nicht dargestellten Fahrzeug-Bremsanlage bestimmt, in welches sie Bremsflüssigkeit fördert. Dabei ist jeder Pumpenkolben 21 bzw. 22 einem getrennten Förderkreis zugeordnet. Die Hubkolbenpumpe 10 mit zwei Pumpenkolben 21 und 22 kann aber auch genutzt werden, um Betriebsflüssigkeit in einen gemeinsamen Ausgang 45 zu fördern, wie dies in Figur 1 durch strichpunktierte Linien schematisch wiedergegeben ist. Hierdurch wird eine Vergleichmäßigung des pulsierenden Förderstromverlaufs erzielt, weil die Förderung des einen Pumpenkolbens bereits einsetzt, bevor der andere seine Förderphase abschließt.

**Patentansprüche**

1. Hubkolbenpumpe (10) mit einer Antriebwelle (13), welche einen zu deren Längsachse (O) unter einem spitzen Winkel ($\beta$) abgeknickten kreiszylindrischen Taumelzapfen (14) mit einem umfangsseitig angeordneten Wälzlagerring (18) hat, der mit der als Teil einer Kugeloberfläche ausgebildeten Stirnfläche (27) wenigstens eines Pumpenkolbens (21) wenigstens mittelbar in Eingriff steht, wobei die Längsachsen (O, P) von Antriebswelle (13) und Pumpenkolben (21) in einer gemeinsamen Ebene verlaufen, gekennzeichnet durch die Merkmale:
   - der Pumpenkolben (21) greift an der Umfangsfläche (29) des Wälzlagerrings (18) an,
   - die Längsachsen (O, P) der Antriebswelle (13) und des Pumpenkolbens (21) schneiden sich rechtwinklig,
   - die Längsachsen (O, T) der Antriebswelle (13) und des Taumelzapfens (14) sind gegeneinander versetzt.

2. Hubkolbenpumpe nach Anspruch 1, dadurch gekennzeichnet, daß wenigstens zwei Pumpenkolben (21, 22) mit gleichmäßiger Teilung in vorzugsweise einer rechtwinklig zur Längsachse (O) der Antriebswelle (13) verlaufenden Ebene angeordnet sind.

3. Hubkolbenpumpe nach Anspruch 2, dadurch gekennzeichnet, daß die wenigstens zwei diametral gegenüberliegenden Pumpenkolben (21) in einen gemeinsamen Ausgangs (45) fördern.

FIG. 1

FIG. 4

5

# FIG. 3

# FIG. 2

Europäisches
Patentamt

**EUROPÄISCHER
RECHERCHENBERICHT**

Nummer der Anmeldung

**EP 90 12 5344**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,A | FR-A-2 307 144 (POCLAIN) <br> * Seite 2, Zeile 15 - Seite 4, Zeile 8; Figuren * <br> — — — | 1,2-3 | F 04 B 9/04 |
| Y | WO-A-8 400 403 (SAUDER) <br> * Seite 3, Zeile 13 - Seite 6, Zeile 31; Figur 1 * <br> — — — — — | 1 | |

RECHERCHIERTE
SACHGEBIETE (Int. Cl.5)

F 04 B
F 01 B

Der vorliegende Recherchenbericht wurde für alle Patentansprüche erstellt

| Recherchenort | Abschlußdatum der Recherche | Prüfer |
|---|---|---|
| Den Haag | 19 Juni 91 | VON ARX H.P. |